# FASCICULE DE BREVET EUROPEEN

(11) **EP 1 564 533 B1**
(45) Date de publication et mention de la délivrance du brevet: **20.11.2013**
(21) Numéro de dépôt: 05300109.5
(22) Date de dépôt: 10.02.2005
(51) Int. Cl.: G01F 15/14, G01F 15/00

(54) **Procédé de détection de fraude d'un compteur et compteur muni de moyens de détection de fraude**
Betrugsfeststellungsverfahren von einem Flüssigkeitszähler und Flüssigkeitszähler mit einer Betrugsfeststellungsvorrichtung
Fraud detection method of a fluid meter and fluid meter with a fraud detection device

(30) Priorité: 13.02.2004 FR 0450259
(43) Date de publication de la demande: 17.08.2005
(73) Titulaire: Actaris S.A.S., 92643 Boulogne-Billancourt (FR)
(72) Inventeur: Demia, Laurent, 01120, Montluel (FR); Cros, Alain, 71680, Creches Sur Saône (FR)
(74) Mandataire: Howson, Richard G.B.

(56) Documents cités:
- EP-A- 1 326 061
- WO-A-94/29677
- DE-A- 19 746 153
- FR-A- 2 196 732
- FR-A- 2 646 271
- US-A- 3 795 144

## Description

L'invention se rapporte à un procédé de détection de fraude d'un compteur ainsi qu'à un compteur de fluide, et notamment un compteur d'eau, muni de moyens permettant de détecter une fraude ou une tentative de fraude.

Les compteurs de fluide sont destinés à mesurer la quantité de fluide, tel que du gaz ou de l'eau, consommée par un abonné pendant une période déterminée. Pour des raisons diverses et bien entendu afin de diminuer le montant de leurs factures, certains abonnés essaient de freiner ou même d'arrêter l'enregistrement de leur consommation. Ces fraudes peuvent prendre diverses formes et les méthodes pour les éviter sont donc variées et nombreuses.

A titre d'exemple, une méthode de fraude consiste tout d'abord à démonter le compteur qui est généralement en deux parties : le corps du compteur proprement dit et le totalisateur qui comporte un mécanisme à rouleaux pour l'enregistrement de la consommation. Puis, en accédant au totalisateur, on peut ainsi diminuer la quantité de fluide enregistrée en tournant les rouleaux ou simplement bloquer le comptage. II existe alors de nombreuses méthodes pour empêcher le démontage du compteur. Ainsi le brevet US 4,663,970 décrit un système utilisant une goupille pour la fixation du totalisateur sur le corps d'un compteur d'eau, toute tentative d'enlèvement de la goupille laissant des traces visibles sur celle-ci ou la détruisant. Le brevet US 3,893,586 décrit également un système similaire.

Selon le brevet US 2,297,528, toute tentative illégale de séparation du totalisateur du corps du compteur est mise en évidence par l'arrêt définitif du comptage, même si le totalisateur est replacé dans sa position initiale.

Le type de fraude par lequel le fraudeur accède directement au totalisateur pour modifier l'enregistrement n'est plus guère utilisé car les mécanismes mis au point pour l'empêcher sont relativement efficaces.

Selon le brevet US 5,086,292 le compteur comporte des capteurs qui indiquent si une tentative de fraude a eu lieu, quelque soit la méthode de fraude utilisée, mais qui permettent aussi d'estimer la consommation réelle. Ce dispositif a l'inconvénient majeur d'être cher et compliqué, donc sujet à des pannes de fonctionnement. De plus, les capteurs nécessitent une source d'alimentation électrique pour fonctionner, ce qui n'est pas commode avec un compteur d'eau et qui augmente le prix du compteur.

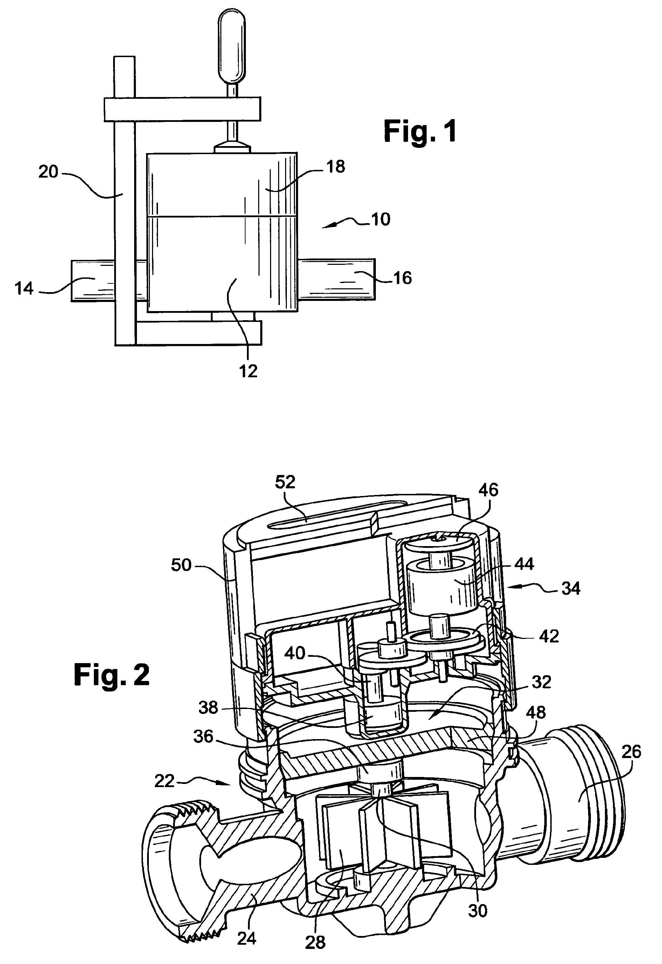

Une autre méthode de fraude consiste à exercer une pression sur la face avant du totalisateur de façon à freiner ou même à arrêter le fonctionnement du totalisateur. Cette méthode est illustrée sur la figure 1 qui montre de façon schématique un compteur d'eau 10. Il comprend un corps de compteur 12 muni d'une tubulure d'admission 14 et d'une tubulure de sortie 16. Ces tubulures sont destinées à être reliées à une canalisation d'eau non représentée. Un totalisateur 18 est fixé au-dessus du corps de compteur. Les fraudeurs utilisent un outil, tel qu'un serre-joint 20, pour exercer une pression sur le compteur. En fait, le corps du compteur étant en laiton ou en plastique très résistant, la partie du compteur la plus sensible à l'écrasement est le totalisateur et notamment sa vitre. A proximité immédiate de cette vitre se trouve le mécanisme d'engrenage du totalisateur. Les fraudeurs essaient de freiner ou de bloquer ce mécanisme en exerçant une pression sur ce mécanisme, à travers la vitre du totalisateur. Lorsque le serre-joint est enlevé, il n'y a pas trace de la fraude si la vitre du totalisateur n'est pas endommagée, ce qui est souvent le cas car la vitre est généralement réalisée en un matériau relativement élastique, tel que le polycarbonate.

La demande de brevet EP 1 265 055 déposée par la demanderesse apporte une solution à cette méthode de fraude. Selon cette invention, une pièce du totalisateur, telle qu'une butée, se brise et vient bloquer le mécanisme d'engrenage du totalisateur lorsqu'une pression mécanique trop importante est appliquée sur la vitre du totalisateur. La fraude est ainsi mise en évidence puisque le comptage s'est arrêté, les engrenages du totalisateur étant bloqués, et la pièce qui s'est brisée est visible à travers la vitre du totalisateur. Bien qu'intéressante, cette solution est coûteuse puisqu'il est nécessaire de remplacer le totalisateur et même parfois de remplacer tout le compteur, ce qui signifie non seulement d'acheter un nouveau totalisateur ou un compteur mais aussi des coûts de main d'oeuvre de démontage du totalisateur ou du compteur endommagé et de montage du totalisateur ou du compteur neuf.

Il a aussi été proposé d'améliorer la tenue mécanique des compteurs à l'écrasement en utilisant pour la fabrication des compteurs des matériaux mécaniquement plus résistants. Cependant cette solution augmente le prix des compteurs.

EP 1326061 décrit une débitmètre liquide comprenant un corps de base, un filtre, une chambre de mesure contenant un dispositif de mesure de rotation, un intégrateur, et un séparateur étanche entre le dispositif de mesure et l'intégrateur dans la zone sèche. Le dispositif selon l'invention est réalisé sous la forme d'un ensemble de modules indépendants dont un module de mesure, un module intégrateur, un module de verrouillage et un module de filtrage. Lesdits modules comprennent des moyens d'assemblage complémentaires de sorte qu'ils peuvent être combinés pour former ledit compteur.

FR 2646271 décrit un compteur, de genre comprenant un totalisateur qui est monté sur un support à sa base et qui est muni à sa partie supérieure d'un cadran sur lequel les volumes consommés. En vue de la rendre inviolable, ce compteur est caractérisé par le fait qu'il comprend un capot en matière plastique transparente sous la forme de pot renversé qui coiffe le totalisateur et son cadran, et qui est fixé à sa base sur le support du compteur, et par le fait qu'une lame de verre est interposée entre le cadran du compteur et la partie supérieure de ce capot, un espace libre étant ménagé entre ladite lame de verre et ladite partie supérieure du capot.

WO94/29677 décrit un hydromètre qui se caractérise en ce que l'écart entre la paroi avant du couvercle et le disque ou ses indicateurs est supérieur à la flexion élastique maximale de la paroi avant du couvercle.

DE19746153 décrit un compteur d'eau comprenant un boîtier contenant un mécanisme de commande d'un compteur d'affichage qui peut être vue à travers une fenêtre de lecture, chaque boîtier de compteur ayant une identification individuelle. Cette dernière est fournie par un composant qui est fixé au boîtier de compteur pour empêcher son retrait non autorisé par exemple en le fixant à la bague filetée utilisé pour maintenir la fenêtre de lecture en connexion étanche à la pression avec le boîtier du compteur.

L'invention est définie selon les revendications ci-après.

La présente invention apporte une solution peu coûteuse au problème de la fraude par écrasement du compteur afin de freiner ou bloquer le fonctionnement du totalisateur. Cette solution est facilement adaptable aux compteurs existants et permet de déceler aisément toute tentative de fraude, par l'apparition de traces visuelles sous forme de fissures sur la partie du compteur concernée par l'invention.

De façon plus précise, l'invention se rapporte à un procédé de détection de fraude d'un compteur de fluide muni d'un totalisateur comportant un organe de comptage et comprenant un capot, fraude consistant à freiner ou à bloquer le fonctionnement dudit organe de comptage en exerçant une pression sur ledit capot; pour la fabrication d'au moins une partie dudit capot susceptible d'être soumise à ladite pression on utilise un matériau dont l'allongement à la rupture est faible et en ce que l'épaisseur de ladite partie de capot ainsi que la distance dudit capot audit organe de comptage sont déterminées, de telle sorte que ladite fraude est détectée par la fissuration de ladite partie du capot.

Ladite partie du capot est réalisée en un matériau dont l'allongement à la rupture est inférieur ou égal à 10% et forme avantageusement un module témoin interchangeable ou forme tout ou partie de la vitre du totalisateur.

Le matériau est choisi parmi les plastiques styrénique tel que le polystyrène, les plastiques ABS, les plastiques SAN ou parmi les polymethacrylates de méthyl.

L'invention concerne également un compteur de fluide comportant un corps de compteur, un élément mesurant placé dans ledit corps, un totalisateur pour enregistrer la consommation de fluide et comportant un organe de comptage et comprenant un capot et des moyens pour la détection d'une fraude consistant à freiner ou à bloquer le fonctionnement du dit organe de comptage en exerçant une pression sur ledit capot, lesdits moyens de détection d'une fraude comportant une surface témoin placée en regard d'au moins une partie du totalisateur et réalisée en un matériau dont l'allongement à la rupture est faible et en ce que l'épaisseur de ladite surface témoin ainsi que la distance du dit capot au dit organe de comptage sont déterminées, de telle sorte que ladite fraude est détectée par la fissuration de ladite surface témoin.

L'allongement du matériau à la rupture est de préférence inférieur ou égal à 10%, ce qui signifie que le matériau ne peut pas s'allonger de plus de 10% sous l'effet d'une contrainte mécanique sans que des fissures apparaissent.

Le matériau est choisi parmi les plastiques styrèniques (Polystyrène PS en tête, puis certains plastiques désignés par les appellations ABS ou SAN). Ces plastiques sont les plus cassants.

La famille suivante est celle des polyméthacrylates de méthyl (PMMA) tel que le plexiglas.

La surface témoin, réalisée en matériau dont l'allongement à la rupture est faible, peut être constituée par tout ou partie de la vitre du totalisateur. Le mot "vitre" désigne ici la partie frontale ou supérieure du totalisateur qui comprend généralement la fenêtre de lecture des rouleaux.

Les moyens de détection d'une fraude peuvent aussi être constitués d'un module témoin comprenant ladite surface témoin, ledit module étant fixé au totalisateur. Ce module témoin est alors avantageusement une pièce interchangeable. En cas de fraude, il n'est pas nécessaire de changer le totalisateur ou le compteur mais uniquement le module témoin, ce qui est rapide et peu onéreux.

Le module est de préférence fixé au totalisateur par des moyens qui permettent de déterminer si le module a été démonté.

Le module peut avantageusement constitué tout ou partie du capot du totalisateur.

L'invention peut s'appliquer à des compteurs d'eau, des compteurs de gaz et plus généralement à tous types de compteurs de fluide susceptibles d'être fraudés par l'application d'une contrainte mécanique dans le but de freiner ou de bloquer le mécanisme de comptage.

D'autres caractéristiques et avantages de la présente invention apparaîtront dans la description suivante détaillée, non limitative, de divers modes de réalisation en référence aux dessins parmi lesquels :
- la figure 1 montre schématiquement une façon classique de frauder un compteur par écrasement;
- la figure 2 représente une vue éclatée d'un compteur d'eau;
- les figures 3a et 3b illustrent schématiquement le principe d'un mode de réalisation de l'invention selon lequel les moyens de détection d'une fraude sont constitués par un module témoin interchangeable;
- la figure 4 montre un mode de réalisation préféré selon lequel une partie du capot du totalisateur est réalisé selon l'enseignement de l'invention;
- les figures 5 et 6 montrent les dommages visibles laissés par une tentative de fraude de compteurs conformes à l'invention.

La figure 2 représente une vue éclatée d'un compteur d'eau qui comprend un corps de compteur 22, appelé bâche, muni d'une tubulure d'admission 24 et d'une tubulure de sortie 26 pour respectivement l'entrée et la sortie de l'eau traversant le compteur. Ces tubulures sont destinées à être connectées à une canalisation d'eau non représentée. Un élément mesurant, sous forme d'une turbine 28, est fixé dans le corps du compteur sur le trajet de l'eau traversant le compteur. Cette turbine comporte un axe de rotation 30 sensiblement perpendiculaire au trajet de la circulation de l'eau dans le compteur. La turbine et l'axe de rotation sont solidaires en rotation.

Dans le cas d'un compteur volumétrique, l'élément mesurant est constitué principalement d'un piston. L'invention s'applique aux deux types de compteurs : volumétrique et à turbine.

Des moyens de couplage 32 transmettent le mouvement de rotation de l'élément mesurant 28 et de son axe 30 à un totalisateur 34. Ces moyens de couplage sont à entraînement magnétique. Ils sont constitués de deux aimants 36 et 38 se faisant face. L'aimant 36 est fixé à l'extrémité supérieure de l'axe 30. L'aimant 38 est fixé à un arbre d'engrenage 40 du totalisateur 34, qui en tournant met en rotation une série de roues d'engrenage 42. La dernière roue est solidaire en rotation d'une vis sans fin 44 laquelle fait tourner, d'une part, le rouleau de poids le plus faible du totalisateur et, d'autre part, un disque 46 qui peut être couplé à un dispositif de lecture à distance du compteur lorsque ce dernier en est équipé (ce qui n'est pas le cas ici). Ce couplage peut être par exemple optique, magnétique, capacitif ou inductif.

Un plateau 48 sépare de façon étanche à l'eau la partie corps de compteur 22 de la partie totalisateur 34. Ce plateau est réalisé en un matériau magnétiquement transparent pour permettre un bon couplage magnétique entre l'aimant 36 et l'aimant 38.

Le totalisateur est fermé en partie par un capot 50. Dans les compteurs de l'art antérieur, le capot 50 ferme complètement le totalisateur 34 et il est fabriqué en un matériau relativement élastique, tel que le polycarbonate. Ce matériau absorbe bien les contraintes, notamment mécaniques, et donc résiste et ne laisse pas apparaître de dommages visuels en cas de fraude telle que celle illustrée sur la figure 1.

Sur la figure 2 on comprend aisément le procédé employé pour la fraude : il s'agit d'exercer sur les roues d'engrenage 42 et la vis sans fin 44 une contrainte mécanique telle qu'elle freine ou même arrête temporairement ou définitivement la rotation de ces roues et de cette vis sans fin et donc la rotation des rouleaux du totalisateur.

Les rouleaux du totalisateur sont visibles à travers une fenêtre 52 ce qui permet de lire la consommation d'eau enregistrée.

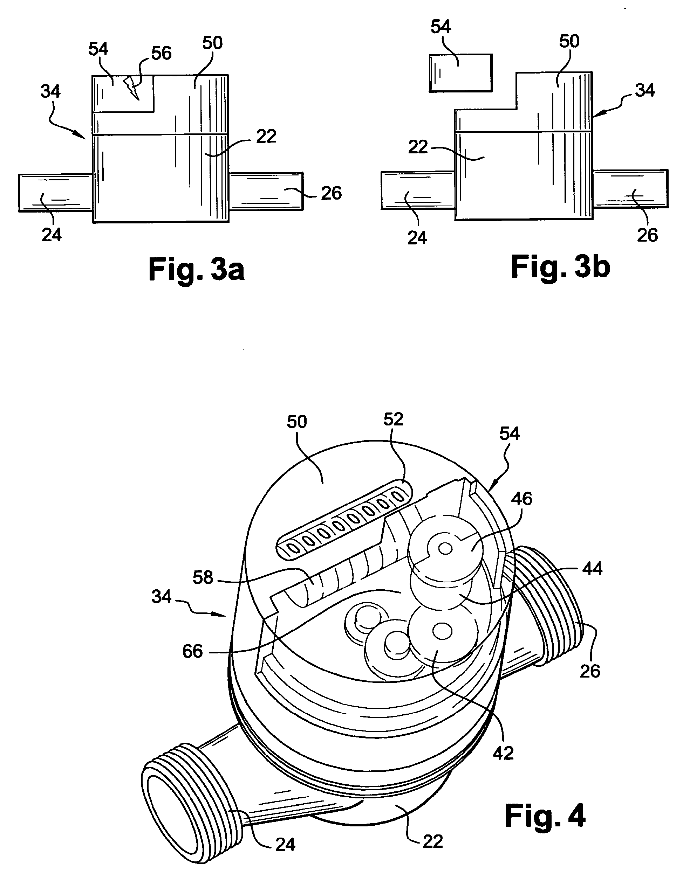

La partie du totalisateur non recouverte par le capot 50 est, selon un mode de réalisation de l'invention, fermée par un module témoin 54 (figures 3, 4 et 5).

Selon l'invention, le module est réalisé en un matériau dont l'allongement à la rupture est faible et l'épaisseur du module ainsi que la distance du module à un organe de comptage, tel que le disque 46, sont déterminées, de telle sorte que la fraude est détectée par la fissuration du module.

Cette valeur d'allongement à la rupture peut être déterminée expérimentalement, ou le matériau choisi expérimentalement, de la façon suivante : avec un compteur en fonctionnement à débit d'eau constant, on exerce une contrainte mécanique sur le module témoin jusqu'à obtenir une diminution du comptage ; des fissures visibles dans le matériau du module témoin doivent alors apparaître avant toute modification du comptage (en d'autres termes des fissures doivent apparaître avant tout changement de la vitesse de rotation du disque 46).

Dans le cadre de la mise au point de cette invention, il a été déterminé que l'allongement à la rupture sous l'effet d'une contrainte mécanique est avantageusement inférieur ou égal à 10%. Bien entendu, cette valeur dépend de la structure du compteur et notamment de la distance séparant l'enveloppe extérieur du compteur, telle que la vitre du totalisateur, à un élément du totalisateur, tel que le disque 46, sur lequel on peut essayer d'agir par pression pour contrarier son fonctionnement.

Les matériaux ayant cette propriété et intéressants pour la fabrication de modules témoins sont avantageusement des matériaux plastiques tels que par exemple les plastiques styrèniques comme le polystyrène (PS), certains plastiques désignés par les appellations ABS ou SAN.

Les matériaux de la famille des polyméthacrylates de méthyl, comme le plexiglas, peuvent convenir.

Le module témoin 54 comporte une surface 66 située en regard du mécanisme d'engrenage 42 et du disque 46. En se reportant à la figure 1, on comprend aisément que cette surface est exposée aux contraintes mécaniques qu'un fraudeur pourrait exercer sur le compteur pour bloquer ou freiner le comptage. Cette surface 66 constitue en quelque sorte une surface témoin.

Comme illustré sur les figures 3, le module est interchangeable. Ces figures 3 montrent schématiquement un compteur avec le corps du compteur 22, les tubulures d'entrée 24 et de sortie 26, le totalisateur 34 avec son capot 50 et un module témoin 54. Sur la figure 3a, le compteur a été victime d'une tentative de fraude par écrasement. Une fissure 56 s'est alors créée dans le matériau du module témoin.

Sur la figure 3b, le module témoin est remplacé par un module non endommagé. Cette possibilité d'échange de module témoin a l'avantage d'être peu coûteuse car elle ne nécessite pas le changement du totalisateur ou du compteur. De plus, l'opération d'échange de module est rapide et ne modifie en rien l'enregistrement de la consommation d'eau enregistrée.

La figure 4 montre le mode de réalisation de la figure 2, mais avec le module témoin 54 recouvrant la partie du totalisateur non fermée par le capot 50. Ce module témoin est fabriqué en polystyrène. Ce matériau, en plus d'avoir un allongement faible à la rupture, a l'avantage d'être transparent. On distingue ainsi, à travers la surface témoin 66, les rouleaux 58 du totalisateur ainsi que le mécanisme d'engrenage 42, la vis sans fin 44 et le disque 46. Ce dernier n'est pas obligatoire mais la plupart des compteurs fabriqués actuellement en sont munis car la présence de ce disque permet l'installation aisée, dans l'immédiat ou dans le futur, d'un système de lecture à distance du compteur.

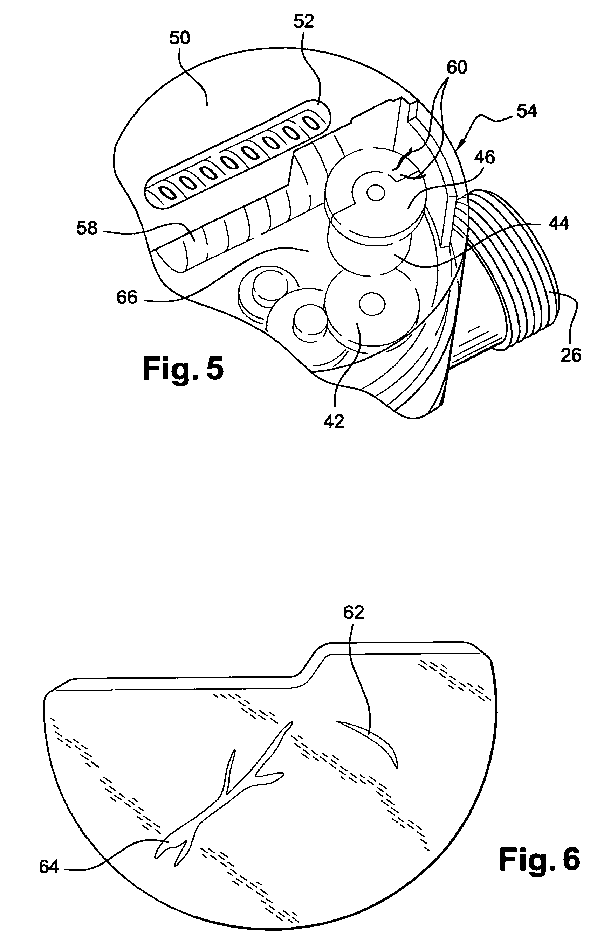

La figure 5 montre en détails une partie du compteur qui comprend le capot 50 avec la fenêtre de lecture 52 des rouleaux 58, le module témoin 54 avec la surface témoin 66, le disque 46, la vis sans fin 44, le mécanisme d'engrenage 42 et la tubulure de sortie 26. En regard du disque 46, des fissures 60 se sont formées dans la surface témoin 66 provoquées par l'écrasement du compteur à l'endroit du disque 46 dans le but de freiner ou de bloquer la rotation de ce disque et donc le comptage.

La figure 6 montre également des dommages 62 et 64, sous forme de fissures, infligés au module témoin sous l'effet d'une contrainte mécanique.

Le module témoin 54 est fixé au capot 50 par des moyens appropriés qui, d'une part, permettent de s'apercevoir si une tentative de démontage du module a eu lieu et, d'autre part, de changer aisément de module si nécessaire. De préférence, le module est fixé par exemple par un anneau de plombage, une étiquette avec témoin de fraude ou un clip cassant.

Selon une autre forme de réalisation non représentée, on n'utilise plus de module témoin mais le capot 50 recouvre complètement le totalisateur. En d'autres termes, le capot 50 et le module 54 ne forme qu'une seule pièce. Dans ce cas, afin de pouvoir déterminer les tentatives de fraude, tout ou partie de la surface supérieure du capot est réalisée en un matériau dont l'allongement à la rupture est faible, avantageusement inférieur ou égal à 10%, formant ainsi une surface témoin. De plus, l'épaisseur de cette partie de capot ainsi que la distance du capot à l'organe de comptage sont déterminées, de telle sorte que la fraude est détectée par la fissuration de ladite partie du capot. Les matériaux utilisables sont ceux qui ont été indiqués pour la fabrication du module témoin.

Selon la présente invention, il est nécessaire qu'une surface seulement, appelée surface témoin, possède la propriété de faible allongement sous contrainte mécanique. L'emplacement de la surface témoin est choisi selon la structure du compteur de telle sorte qu'une tentative de fraude par écrasement soumette inévitablement la surface témoin à l'écrasement. De façon générale, la surface témoin se trouve située en regard du mécanisme d'engrenage 42 ou du disque 46, sur la face avant du compteur où se trouve la fenêtre 52 de lecture des rouleaux.

L'invention a été décrite à l'aide de modes de réalisation concernant un compteur d'eau. II est évident pour l'homme de l'art que l'invention s'applique à tous types de compteurs munis d'un dispositif de comptage qui peut éventuellement être fraudé par écrasement. C'est le cas par exemple des compteurs de gaz domestiques qui comportent généralement un totalisateur.

## Revendications

1. Procédé de détection de fraude d'un compteur de fluide muni d'un totalisateur (34) comportant un organe de comptage (46) et comprenant un capot, fraude consistant à freiner ou à bloquer le fonctionnement dudit organe de comptage en exerçant une pression sur ledit capot (50), l'épaisseur d'au moins une partie dudit capot ainsi que la distance dudit capot au dit organe de comptage étant déterminées, de telle sorte que ladite fraude est détectée par la fissuration de ladite partie dudit capot, **caractérisé en ce que** l'on utilise pour la fabrication de ladite partie (54) dudit capot susceptible d'être soumise à ladite pression un matériau dont la valeur de l'allongement à la rupture est inférieure ou égale à 10% et **en ce que** ledit matériau est une matière plastique choisie parmi les plastiques styrèniques tel que le polystyrène, les plastiques ABS, les plastiques SAN ou parmi les polymethacrylates de méthyl.

2. Procédé selon la revendication 1 **caractérisé en ce que** ladite partie du capot réalisée en un matériau dont la valeur de l'allongement à la rupture est inférieure ou égale à 10% forme un module témoin interchangeable.

3. Procédé selon l'une des revendications 1 ou 2 **caractérisé en ce que** ladite partie du capot réalisée en un matériau dont l'allongement à la rupture est inférieure ou égale à 10% forme au moins une partie de la vitre du totalisateur.

4. Compteur de fluide comportant un corps de compteur (22), un élément mesurant (28) placé dans ledit corps, un totalisateur (34) pour enregistrer la consommation de fluide et comportant un organe de comptage (46) et comprenant un capot et des moyens (54) pour la détection d'une fraude consistant à freiner ou à bloquer le fonctionnement du dit organe de comptage en exerçant une pression sur ledit capot, lesdits moyens de détection d'une fraude comportant une surface témoin (66) placée en regard d'au moins une partie du totalisateur, l'épaisseur de ladite surface témoin ainsi que la distance du dit capot au dit organe de comptage étant déterminées, de telle sorte que ladite fraude est détectée par la fissuration de ladite surface témoin, **caractérisé en ce que** ladite surface témoin est réalisée en un matériau dont la valeur de l'allongement à la rupture est inférieure ou égale à 10% et **en ce que** et **en ce que** ledit matériau est choisi parmi les plastiques styrèniques tel que le polystyrène, les plastiques ABS et les plastiques SAN ou parmi les polyméthacrylates de méthyl.

5. Compteur selon la revendication 4 **caractérisé en ce que** ladite surface témoin est constituée au moins en partie par une vitre du totalisateur.

6. Compteur selon la revendication 4 ou 5 **caractérisé en ce que** lesdits moyens de détection d'une fraude sont constitués d'un module témoin (54) comprenant ladite surface témoin (66), ledit module étant fixé au totalisateur.

7. Compteur selon la revendication 6 **caractérisé en ce que** ledit module témoin est une piece interchangeable.

8. Compteur selon la revendication 6 ou 7 **caractérisé en ce que** ledit module est fixé au totalisateur par des moyens qui permettent de déterminer si le module a été démonté, lesdits moyens comportant un anneau de plombage, une étiquette avec témoin de fraude ou un clip cassant.

## Patentansprüche

1. Verfahren zum Erkennen einer Manipulierung eines Fluidzählers, der mit einem Totalisator (34) ausgestattet ist, der ein Zählwerk (46) umfasst und eine Kappe umfasst, wobei eine Manipulierung in dem Drosseln oder dem Blockieren der Funktion des Zählwerks besteht, indem ein Druck auf die Kappe (50) ausgeübt wird, wobei die Dicke mindestens eines Teils der Kappe sowie der Abstand der Kappe von dem Zählwerk derart festgelegt sind, dass die Manipulierung durch die Rissbildung in dem Teil der Kappe erkannt wird, **dadurch gekennzeichnet, dass** zur Fertigung des Teils (54) der Kappe, der möglicherweise dem Druck unterzogen wird, ein Material verwendet wird, dessen Bruchdehnungswert kleiner gleich 10 % ist, und dass das Material ein Kunststoff ist, der aus Styrolkunststoffen wie Polystyrol, ABS-Kunststoffen, SAN-Kunststoffen oder aus Polymethylmethacrylaten ausgewählt ist.

2. Verfahren nach Anspruch 1, **dadurch gekennzeichnet, dass** der Teil der Kappe, der aus einem Material hergestellt ist, dessen Bruchdehnungswert kleiner gleich 10 % ist, ein austauschbares Kontrollmodul bildet.

3. Verfahren nach einem der Ansprüche 1 oder 2, **dadurch gekennzeichnet, dass** der Teil der Kappe, der aus einem Material hergestellt ist, dessen Bruchdehnungswert kleiner gleich 10 % ist, mindestens einen Teil des Fensters des Totalisators bildet.

4. Fluidzähler, der einen Zählerkörper (22), ein Messelement (28), das in dem Körper angeordnet ist, und einen Totalisator (34) zum Aufzeichnen des Fluidverbrauchs umfasst, der ein Zählwerk (46) umfasst und eine Kappe und Mittel (54) zum Erkennen einer Manipulierung umfasst, die in dem Drosseln oder dem Blockieren der Funktion des Zählwerks besteht, indem ein Druck auf die Kappe ausgeübt wird, wobei die Mittel zum Erkennen einer Manipulierung eine Kontrollfläche (66) umfassen, die gegenüber mindestens einem Teil des Totalisators angeordnet ist, wobei die Dicke der Kontrollfläche sowie der Abstand der Kappe von dem Zählwerk derart festgelegt sind, dass die Manipulierung durch die Rissbildung in dem Teil der Kontrollfläche erkannt wird, **dadurch gekennzeichnet, dass** die Kontrollfläche aus einem Material hergestellt ist, dessen Bruchdehnungswert kleiner gleich 10 % ist, und dass das Material aus Styrolkunststoffen wie Polystyrol, ABS-Kunststoffen und SAN-Kunststoffen oder aus Polymethylmethacrylaten ausgewählt ist.

5. Zähler nach Anspruch 4, **dadurch gekennzeichnet, dass** die Kontrollfläche zumindest zum Teil aus einem Fenster des Totalisators besteht.

6. Zähler nach Anspruch 4 oder 5, **dadurch gekennzeichnet, dass** die Mittel zum Erkenn einer Manipulierung aus einem Kontrollmodul (54) bestehen, das die Kontrollfläche (66) umfasst, wobei das Modul an dem Totalisator angebracht ist.

7. Zähler nach Anspruch 6, **dadurch gekennzeichnet, dass** das Kontrollmodul ein austauschbares Teil ist.

8. Zähler nach Anspruch 6 oder 7, **dadurch gekennzeichnet, dass** das Modul durch Mittel an dem Totalisator angebracht ist, die ermöglichen zu bestimmen, ob das Modul abgebaut wurde, wobei die Mittel einen Plombierring, ein Schild mit Manipulierungskontrolle oder einen zerbrechlichen Clip umfassen.

## Claims

1. Method of fraud detection in a fluid meter provided with a totaliser (34) including a counter (46) and comprising a cover, fraud consisting of slowing down or blocking the operation of the said counter by exerting a pressure on the said cover (50), the thickness of at least one part of the said cover and also the distance of the said cover from the said counter being determined in such a way that the said fraud is detected by cracking of the said part of the said cover, **characterised in that** for the manufacture of the said part (54) of the said cover capable of being subjected to the said pressure a material is used for which the value of the elongation at break is less than or equal to 10% and **in that** the said material is a plastic material chosen from among the styrene plastics such as polystyrene, ABS plastics, SAN plastics or polymethylmethacrylates.

2. Method as claimed in Claim 1, **characterised in that** for the manufacture of the said part of the cover made from a material of which the value of the elongation at break is less than or equal to 10% forms an interchangeable reference module.

3. Method as claimed in any one of Claims 1 or 2, **characterised in that** for the manufacture of the said part of the cover made from a material of which the value of the elongation at break is less than or equal to 10% forms at least a part of the window of the totaliser.

4. Fluid meter including a meter body (22), a measuring element (28) placed in the said body, a totaliser (34) for recording the consumption of fluid and including a counter (46) and comprising a cover and means (54) for detecting a fraud consisting of slowing down or blocking the operation of the said counter by exerting a pressure on the said cover, the said fraud detection means including a reference surface (66) placed facing at least one part of the totaliser, the thickness of the said reference surface and also the distance of the said cover from the said counter being determined in such a way that the said fraud is detected by cracking of the said reference surface, **characterised in that** the said reference surface is made from a material of which the value of the elongation at break is less than or equal to 10% and **in that** the said material is chosen from among the styrene plastics such as polystyrene, ABS plastics and SAN plastics or polymethylmethacrylates.

5. Meter as claimed in Claim 4, **characterised in that** the said surface reference surface is formed at least in part by a window of the totaliser.

6. Meter as claimed in Claim 4 or 5, **characterised in that** the said fraud detection means consist of a reference module (54) comprising the said reference surface (66), the said module being fixed to the totaliser.

7. Meter as claimed in Claim 6, **characterised in that** the said reference module is an interchangeable part.

8. Meter as claimed in Claim 6 or 7, **characterised in that** the said module is fixed to the totaliser by means which make it possible to determine whether the module has been removed, the said means including a sealing ring, a tamper-evident label or a breakable clip.
